# EUROPÄISCHE PATENTSCHRIFT

(11) **EP 0 837 322 B1**
(45) Veröffentlichungstag und Bekanntmachung des Hinweises auf die Patenterteilung: **01.09.1999**
(21) Anmeldenummer: 97117450.3
(22) Anmeldetag: 09.10.1997
(51) Int. Cl.: G01N 21/89, G01N 33/36

(54) **Verfahren und Vorrichtung zur Messung und Qualilätsbewertung von Oberflächeneffekten auf textilen Warenbahnen**
Method and apparatus for the measurement and quality evaluation of surface effects on textile webs
Procédé et dispositif pour mesurer et pour évaluer la qualité des effets de surface sur des bandes textiles

(30) Priorität: 16.10.1996 DE 19642712
(43) Veröffentlichungstag der Anmeldung: 22.04.1998
(73) Patentinhaber: Sächsisches Textilforschungsinstitut e.V., 09125 Chemnitz (DE)
(72) Erfinder: Mehlhorn, Heidrun, 09127 Chemnitz (DE); Beier, Hendrik, 09111 Chemnitz (DE)

(56) Entgegenhaltungen:
- EP-A- 0 274 649
- DE-A- 3 639 636
- DE-A- 4 028 394
- PATENT ABSTRACTS OF JAPAN vol. 096, no. 005, 31.Mai 1996 & JP 08 014839 A (KINJI FUJIWARA;OTHERS: 01), 19.Januar 1996,

## Beschreibung

Die Erfindung betrifft ein Verfahren zur Messung und Qualitätsbewertung von Oberflächeneffekten, die beispielsweise beim Rauhen, Schmirgeln, Scheren oder Sengen von textilen Flächengebilden entstehen, sowie eine Einrichtung zur Durchführung des Verfahrens.

Seit Jahren wird bereits versucht, Meßsysteme für die Oberflächeneffekte zu entwickeln. Bekannt ist bereits der Einsatz von mechanischen Sensoren (DD 200 379, FR 26 21 615), die über Dickenänderung bzw. Veränderung der Reibung funktionieren. Bei diesem Prinzip wirken sich unterschiedliche Faserstoffe, Feinheiten und Flächenstrukturen sowie das Umgebungsklima erheblich als Fehlerquellen aus. Außerdem ist die mechanische Messung äußerst erschütterungsempfindlich. Trotz bekannter Verfeinerung der Auswertung haben auf mechanische Messung begründete Verfahren nur für Vergleiche an Meßproben in Labors Bedeutung, da insbesondere Erschütterungen in der Produktion nicht zu vermeiden sind. Ein weiterer wesentlicher Nachteil ist auch, daß der mechanische Meßfühler selbst den zu messenden Effekt in Abhängigkeit von seiner Ausprägung mehr oder weniger verändert.

Aus der DE 36 39 636 ist ein Verfahren zur automatischen Inspektion von ebenen Warenbahnen bekannt, bei dem die Warenoberfläche mit einer Anordnung gleichartiger Farb-Flächenkameras jeweils Ausschnittsweise erfaßt wird. Die Inspektion beruht auf einer in Echtzeit durchgeführten Farbfehler-Erkennung und einer bei unsicheren Erkennungsergebnissen eingeschalteten, nicht mehr in Echtzeit durchgeführten 2-dimensionalen Bildauswertung. Die Farbfehler-Erkennung beruht auf einer mit Hilfe eines Farbmerkmal-Speichers durchgeführten Klassifikation, die Strukturfehler-Erkennung verwendet einen zyklisch beschriebenen Transienten-Bildspeicher zur genaueren 2-dimensionalen Grauwert-Auswertung bei unsicher erkannten Fehlern im lokalen Bereich. Mit Hilfe dieses Verfahrens können Fehler in textilen Flächen aufgefunden, geortet und hinsichtlich ihrer Art (Farbfehler, Strukturfehler) durch Klassifikation örtlicher Farbsignale bzw. Mustererkennungstechniken untersucht werden. Zu diesem Zweck sind Flächenkameras angeordnet, die die gesamte Warenbreite in der Draufsicht erfassen. Dazu werden die Warenbahnen im Auflicht, Durchlicht oder einer Kombination von beiden beleuchtet und das Flächengebilde auf der Kamera abgebildet. Der eingesetzte Klassifikator wird mit Bildern und Farbinformationen der fehlerfreien Fläche angelernt und trifft scharfe Entscheidungen über fehlerhaft bzw. nicht fehlerhaft. Die benutzte Clusterung ist ein Klassenbildungsverfahren, bei dem auf Grund der Ähnlichkeit von Merkmalen ausschließlich nach mathematischen Verfahren klassifiziert wird. Dieses Verfahren kann nur für die textile Warenschau eingesetzt werden, die kein Bearbeitungsprozeß ist, wie auch an der Reaktion auf die Auswertung, nämlich der Protokollierung auf einem Ausgabe-Gerät als fehlerhaftes Gebiet zu erkennen ist.

Die EP 274 649 beschreibt ein Verfahren zum Ausmessen der geometrischen Oberflächenstruktur von Flächengut, das insbesondere zur Überwachung der verbleibenden Haarigkeit beim Absengen oder Scheren von textilen Flächengebilden anwendbar ist. Dabei wird das Flächengebilde auf einer Umlenkfläche gebogen, mit einem tangential seine gebogene Oberfläche streifenden Lichtstrahl abgetastet und nach der Dunkelfeldmethode mit Hilfe eines fotoelektrischen Sensors höhenmäßig ausgemessen, wobei vorzugsweise eine CCD-Diodenzeile als Sensor verwendet wird. Auch bei diesen Verfahren erfolgt keine Bildauswertung, sondern nur eine Abtastung mit einem Lichtstrahl. Dabei sind Lichtquelle und Empfänger auf derselben Achse synchron höhenverstellbar angeordnet. Das Verfahren dient lediglich dazu, die Faserhöhe als Meßwert zu ermitteln. Diese Geometrie ist für Flächen einsetzbar, auf denen abstehende Faserenden eher selten sind. Von dichter mit Faserflor besetzten Artikeln lassen sich keine scharfen Bilder auf der Zeile erzeugen, da in mehreren Ebenen vor dem Sensor gleichzeitig Fasern vorhanden sind.

Des weiteren wurde versucht, über einen ausgewerteten Parameter oder ein linienartiges Signal den Oberflächeneffekt zu beschreiben. Der Mensch als Beurteiler hingegen sieht mehrere Merkmale in flächiger Verteilung, z. B. Florhöhe, Gleichmäßigkeit und Faserdichte, gleichzeitig und verknüpft sie unterbwußt. Deshalb lassen sich mit den bekannten Verfahren Zusammenhänge zu Maschineneinstellungen finden, eine Qualitätsbewertung des Oberflächeneffektes erfolgt jedoch nicht. Die Erkenntnis, daß ein Parameter für die Effektbewertung nicht ausreicht, wurde bereits in der DE 40 28 394 deutlich, hier wurde versucht, optisch und mechanisch zu messen. Bei diesem Verfahren wird zur Messung des Flors keine Aufnahme und Auswertung von Bildern durchgeführt, sondern es wird ein einzelner Lichtstrahl hin und her bewegt und das hinter dem Flor empfangene eindimensionale Lichtsignal als Meßgröße benutzt. Die Umlenkung der Warenbahn ist dabei rund gestaltet, so daß eine verhältnismäßig dicke Florschicht zur Messung kommt. Sender und Empfänger des optischen Tasters sind auf derselben Achse angeordnet. Die ermittelten mechanischen und optischen Meßwerte können nur direkt zur Regelung einer Rauhmaschine benutzt werden.

Der Erfindung liegt die Aufgabe zugrunde, ein Verfahren und eine Vorrichtung zur Messung und Qualitätsbewertung von Oberflächeneffekten zu finden, mit dem qualitätsmindernde Faktoren frähzeitig erkannt und beeinflußt werden können, um durch die Schaffung objektiver Ausgangswerte die Möglichkeiten zur Produktentwicklung bei Flächengebildeherstellern und Veredlern zu verbessern. Die dazugehörige Vorrichtung soll mit geringem konstruktivem Aufwand direkt an der Bearbeitungsmaschine installiert werden, ohne daß die Arbeitsgeschwindigkeit der Maschine reduziert werden muß bzw. das Abschalten der Maschine für die Durchführung des Meßverfahrens erforderlich ist.

Gelöst wird die Aufgabe durch die in den Ansprüchen beschriebenen Merkmale.

Das erfindungsgemäße Verfahren ermöglicht die Minimierung subjektiver Bedienungsfehler, welche auf Grund mangelnder technologischer Erfahrungen des Personals an der Bearbeitungsmaschine möglich sind. Außerdem ergibt sich eine Verbesserung der Möglichkeiten zur Produktentwicklung bei Flächengebildeherstellern und Veredlern durch die Arbeit mit objektiven Ausgangswerten.

Die Erfindung soll nachstehend an Hand eines Ausführungsbeispieles näher erläutert werden. Die dazugehörigen Zeichnungen zeigen in
- Figur 1: eine schematische Darstellung einer Meßstelle in der Seitenansicht,
- Figur 2: eine schematische Darstellung der Meßeinrichtung mit drei Meßstellen in der Draufsicht.

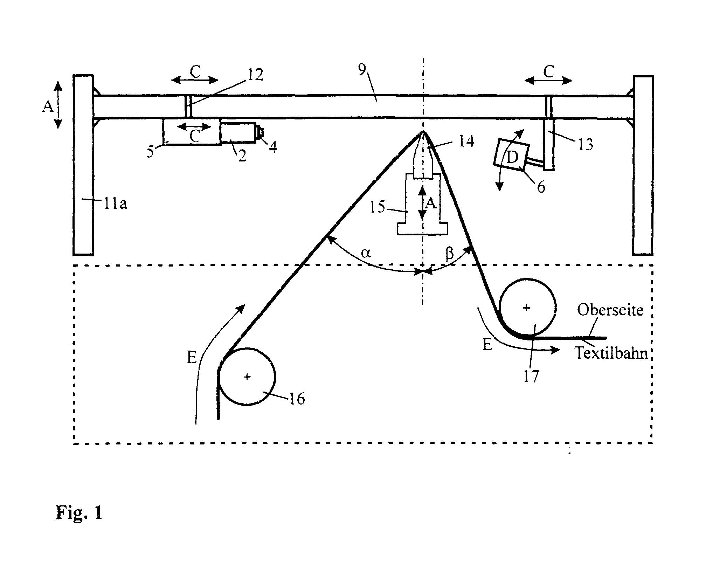

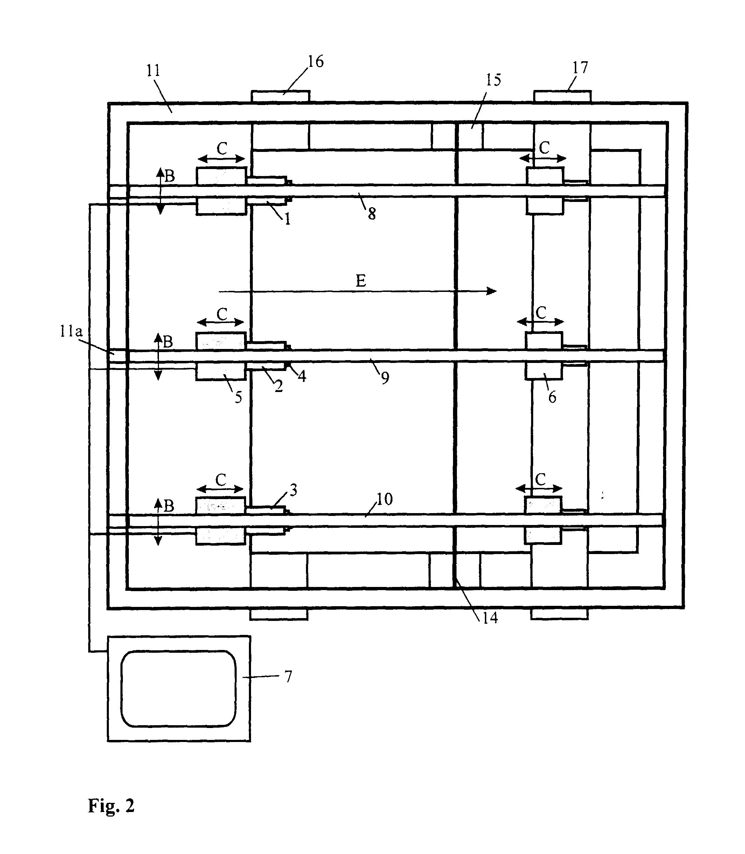

Die zur Durchführung des Verfahrens eingesetzte erfindungsgemäße Meßeinrichtung besteht aus drei Meßstellen, die direkt an der Bearbeitungsmaschine unmittelbar über der mechanisch behandelten Textilbahn angeordnet sind, wobei eine Meßstelle in der Textilbahnmitte und jeweils eine Meßstelle ca. 20 cm vom linken bzw. rechten Rand der Textilbahn justiert sind. Aufbau und Wirkungsweise aller drei Meßstellen sind gleich. Die Figur 1 zeigt die Seitenansicht der Meßstelle 2 in der Mitte der Warenbahn, die eine quer zur Textilbahn verlaufende spitzförmige Meßkante 14 aufweist, über die die Textilbahn mittels Umlenkrolle 16 und Abzugswalze 17 von der Bearbeitungsmaschine geführt wird. Die Meßkante 14 ist auf einem T-förmigen Träger 15 befestigt, der vertikal verstellbar ist. In Höhe der Meßkante 14 befindet sich die CCD-Matrix-Kamera 2, die an der Tragstange 9 befestigt ist. Die Tragstange 9 ist wie auch die Tragstangen 8 und 10, auf der die CCD-Matrix-Kameras 1 und 3 befestigt sind, mittels Haltestützen 11a an einem Rahmen 11 der Bearbeitungsmaschine in Richtung A und B seiten- bzw. höhenverstellbar angeordnet (Figur 2). Die CDD-Matrix-Kameras 2 ist mit einem telezentrischen Objektiv 4 ausgestattet, mit dem die Bildweite fixierbar ist. Die Scharfeinstellung erfolgt über einen motorisch gesteuerten Feintrieb 5, mit dem die Kamera 2, in Richtung C bewegt werden kann. Die Bedienung des Feintriebes 5 und der Kontrollmonitor 7 sind nahe dem Bedienpult der Maschine angeordnet. Zusätzlich kann die CCD-Matrix-Kamera 2 auf der Tragstange 9 mittels verstellbarer Halterungen 12 horizontal verschoben werden, so daß auch bei stark unterschiedlicher Dicke und verschiedenem Charakter des Fasserflors, beispielsweise Decken oder Gewebe für Oberhemden, die Abbildungen der im zu verfolgenden Arbeitsgang interessanten Details gewährleistet sind. Gegenüber der Kamera 2 ist eine Beleuchtungs-Einrichtung 6, beispielsweise ein LED-Blitzlicht (zeitprogrammierbar) oder Reflektor vorgesehen. Die Beleuchtungs-Einrichtung 6 ist wie die Kamera 2 auf der Tragstange 9 angeordnet und kann ebenfalls in Richtung A und B verstellt werden. Mittels geeigneter Halterungen 13 ist die Beleuchtungs-Einrichtung 6 auf denTragstangen 9 auch in Richtung C einstellbar und zusätzlich in Richtung D schwenkbar.

Mit dem erfindungsgemäßen Verfahren wird direkt nach der mechanischen Behandlung der Textilbahn auf der Bearbeitungsmaschine der Oberflächeneffekt der Textilbahn an den drei Meßstellen mittels der CCD-Matrix-Kameras 1, 2 und 3 one-line gemessen und bewertet. Dazu wird die Textilbahn mittels Umlenkrolle 16 und Abzugswalze 17 über die Meßkante 14 geführt, wobei sich die florartige Oberfläche an der Außenseite der Textilbahn befindet. Die Zuführung der Textilbahn von der Umlenkrolle 16 zur Meßkante 14 bzw. der Abzug von dieser mittels Abzugswalze 17 erfolgt erfindungsgemäß in unterschiedlich spitzen Winkeln α und β gemessen zur Senkrechten auf die optische Achse der Objektive 4, wobei der Abzugswinkel β kleiner ist als der Zuführwinkel α. Die spitzförmige Gestaltung der Meßkante 14 gewährleistet, daß Störungen innerhalb der durch die CCD-Matrix-Kameras 1, 2, 3 aufzunehmenden Bilder durch vorherigen bzw. nachfolgenden Faserflor ausgeschlossen werden und somit eine möglichst hohe Tiefenschärfe erzielt wird. Für die Kameras 1, 2, 3 werden dadurch die Fasern der Florschicht sichtbar, die kurzzeitig unmittelbar auf der Spitze der Meßkante 14 aufgestellt sind. Gleichzeitig erfolgt eine Beleuchtung der Textilbahn im Bereich der Meßkante 14, beispielsweise mittels LED-Blitzlicht oder einem schwenkbaren Reflektor 6, im Winkel β, so daß die Aufnahme der Faserzone auf dem Flächengebilde ohne Umgebung und der textilen Fläche selbst (ähnlich der Dunkelfeldbeleuchtung in der Mikroskopie) erfolgt, um Bildverarbeitungsoperationen und Rechenzeit zur Markierung der Faserzone zu vermeiden und ein von unterschiedlichen Farben und Musterungen unabhängiges Bild zu erzeugen. Mittels der installierten CCD-Matrix-Kameras 1, 2, 3 werden die simultan aufgenommenen Graubilder des Faserflors erfaßt in einem digitalen Bildverarbeitungssystem verarbeitet. Über die Binärisierung der Graubilder und logische Operationen mit einem binären Liniengitter mit gleichen Abständen in Kantenrichtung werden Längen der Faserflorschicht errechnet, wobei der Algorithmus so gestaltet ist, daß er von der Lage der Florschicht im Bild unabhängig messen kann und dadurch von der Meßeinrichtung Vibrationen der Meßkante 14 in Richtung A toleriert werden.

Wesentlich ist bei dieser Verarbeitung die Datenreduktion, um beispielsweise im Rauhprozeß der Warenbahngeschwindigkeit angepaßt messen zu können. Dies ist bereits teilweise durch die Art der Beleuchtung erfolgt, wird jedoch vor der Gewinnung von Daten fortgesetzt, indem Binärbilder, Speicherbedarf pro Bild von 230 kByte auf 30 kByte reduziert, gebildet und durch logische Bildoperationen und Überlagerung mit einem binären Liniengitter "Längen" erzeugt werden. Der Bildverarbeitungsalgorithmus ist ortsunabhängig konzipiert, so daß die Vibrationstoleranz in der Größe des Bildes gegeben ist.

Die Längen-Meßwerte werden für die folgenden Auswertungen serienweise zusammengefaßt, wodurch eine quasi-flächenhafte Bewertungsgrundlage gegeben ist. Berechnet werden beispielsweise 9 Parameter der stochastischen Verteilungen. Für diese Parameter können damit gesicherte Zusammenhänge zu Einzelmerkmalen des Effekts, zum Beispiel Modalwert und Florhöhe ermittelt werden. Die Parameter werden als Vektoren oder Sätze für jede Bildserie an den Bewertungsalgorithmus übergeben. Sie sind aber auch wahlweise am Bedienerbildschirm in ihrem Verlauf von Serie zu Serie in Bahnrichtung darstellbar. Für Vergleiche mit vorhandenen Stoffproben werden mit einer Kamera, ohne Trigger, durch Weiterrücken der Probe, derartige Bildserien stationär aufgenommen und nach dem gleichen Algorithmus ausgewertet.

Für die Bewertung der Effektqualität werden alle berechneten Merkmale in den Vektoren herangezogen und mit Fuzzy-Algorithmen behandelt. Letztere gestatten eine komplexe Berücksichtigung und eine der menschlichen Entscheidungsfindung ähnliche Bewertung. Mit den Einschätzungen mehrerer Experten, die eine Einteilung einer repräsentativen Anzahl Stoffproben in Qualitätsklassen ergeben, werden Fuzzy-Klassifikatoren für bestimmte Artikelgruppen z. B. Flanell entwickelt. Die stationär gemessenen Parameter dieser Lernstichproben beschreiben Klassifikatoren. Aus den Merkmalsvektoren, die von Meßserien des Systems der laufenden Maschine oder von bisher nicht eingeschätzten Proben stammen und einem Klassifikator zugeführt werden, berechnet dieser die Wahrscheinlichkeit der Zugehörigkeit zu allen ihm angelernten Klassen. Die Klasse, für die sich die höchste Zugehörigkeit ergibt, ist die berechnete Effektqualität. Die zeitliche Entwicklung der Zugehörigkeit zu den vor dem Start des Systems ausgewählten Klassen kann vom Bediener in graphischer Darstellung am Bildschirm verfolgt werden. Je nach erforderlicher Reaktionszeit an der Maschine, im Ausführungsbeispiel aller 30 s, werden weitere Serien aufgenommen und ausgewertet. Die Klassifikatoren sind den beim Produzenten vorkommenden Artikel angepaßt, bleiben aber veränderbar und lernfähig. Wird das Verfahren ohne Einbeziehung von gespeichertem Expertenwissen zur Qualität durchgeführt, werden die Parameter einer stationär gemessenen Probe ständig als Vergleichswert dargestellt.

## Patentansprüche

1. Verfahren zur Messung und Qualitätsbewertung von Oberflächeneffekten an textilen Warenbahnen, wobei
- direkt nach der mechanischen Behandlung der Textilbahn auf der Bearbeitungsmaschine der Oberflächeneffekt der Textilbahn an drei Meßstellen mittels CCD-Matrix-Kameras (1, 2, 3) one-line gemessen wird,
- dazu die Textilbahn über eine spitzförmige Meßkante (14) geführt wird, wobei der Zu- und Ablauf der Textilbahn von der Meßkante (14) in unterschiedlich spitzen Winkeln α und β zur Senkrechten auf die optische Achse der Objektive (4) erfolgt,
- die an der Oberseite der Textilbahn befindlichen Fasern der Faserflorschicht über der Meßkante (14) aufgestellt und beleuchtet werden,
- die Beleuchtung der Meßstelle im Winkel (β) zur optischen Achse der Objektive (4) erfolgt und die Aufnahme der Faserzone auf dem Flächengebilde ohne Umgebung und der textilen Fläche selbst erfolgt, damit Bildverarbeitungsoperationen und Rechenzeit zur Markierung der Faserzone vermieden wird und ein von unterschiedlichen Farben und Musterungen unabhängiges Bild erzeugt wird,
- die von den Kameras (1, 2, 3) simultan aufgenommenen Graubilder dem Rot-. Grün- und Blaukanal eines Farbbildverarbeiters zugeführt werden,
- deren Auflösung, Abbildungsmaßstab und Shutterzeit auf die Geschwindigkeit der Textilbahn abgestimmt sind, so daß während der Aufnahme eines Bildes maximal eine Bewegungsunschärfe von der Größe des Radius einer Faser entsteht,
- Shutter und Blitzbeleuchtung zeitgleich getriggert sind,
- die Aufnahme von Serien in Bahnrichtung lückenlos zusammengehöriger Bilder pro Kamera (1, 2, 3) erfolgt, die im Bildspeicher gehalten werden,
- über Binärisierung der Graubilder und logische Operationen mit einem binären Liniengitter mit gleichen Abständen in Kantenrichtung Längen der Faserflorschicht errechnet werden, wobei der Algorithmus so gestaltet ist, daß er unabhängig von der Lage der Florschicht im Bild messen kann und dadurch von der Meßeinrichtung Vibrationen der Meßkante (14) in Richtung A, d.h. längs der Senkrechten zur optischen Achse der Objektive, toleriert werden,
- die Längen-Meßwerte für die folgenden Auswertungen serienweise zusammengefaßt werden und eine quasi-flächenhafte Bewertungsgrundlage erreicht wird,
- für die aus Häufigkeitsverteilungen dieser Meßwerte berechneten Parameter gesicherte Zusammenhänge zu Einzelmerkmalen des Effekts, wie beispielsweise Modalwert/Florhöhe, nachgewiesen werden,
- die berechneten Parameter als Vektoren oder Sätze für jede Bildserie gespeichert und an den Bewertungsalgorithmus übergeben werden oder auch wahlweise am Bedienerbildschirm in ihrem Verlauf von Serie zu Serie in Bahnrichtung dargestellt werden,
- für die Vergleiche mit vorhandenen Stoffproben mit einer Kamera, ohne Trigger und durch Weiterrücken der Probe, derartige Bildserien stationär aufgenommen und nach dem gleichen Algorithmus ausgewertet werden,
- für die Bewertung alle berechneten Merkmale in den Vektoren herangezogen und mit Fuzzy-Algorithmen behandelt werden, wobei letzteres eine komplexe Berücksichtigung und eine der menschlichen Entscheidungsfindung ähnliche Bewertung gestattet,
- mit den Einschätzungen mehrerer Experten, die eine Einteilung einer repräsentativen Anzahl Stoffproben in Qualitätsklassen ergeben, Fuzzy-Klassifikatoren für bestimmte Artikelgruppen (z. B. Flanell) entwickelt werden,
- die stationär gemessenen Parameter dieser Lernstichproben die Klassifikatoren beschreiben,
- aus den Merkmalsvektoren, die von Meßserien des Systems an der laufenden Maschine oder von bisher nicht eingeschätzten Proben stammen und einem Klassifikator zugeführt werden, dieser die Wahrscheinlichkeit der Zugehörigkeit zu allen ihm angelernten Klassen berechnet, wobei die Klasse, für die sich die höchste Zugehörigkeit swahrscheinlichkeit ergibt, die berechnete Effektqualität ist,
- die zeitliche Entwicklung der Zugehörigkeit zu vor dem Start des Systems ausgewählten Klassen vom Bediener in graphischer Darstellung am Bildschirm verfolgt werden kann,
- je nach erforderlicher Reaktionszeit an der Bearbeitungsmaschine weitere Serien aufgenommen und ausgewertet werden,
- die Klassifikatoren den beim Produzenten vorkommenden Artikeln angepaßt sind, aber veränderbar und lernfähig bleiben,
- ohne Einbeziehung von gespeicherten Expertenwissen zur Qualität die Parameter einer stationär gemessenen Probe ständig als Vergleichswerte dargestellt werden.

2. Vorrichtung zur Messung und Qualitätsbewertung von Oberflächeneffekten auf textilen Warenbahnen nach Anspruch 1, in welcher
- an der Bearbeitungsmaschine zwischen Umlenkrolle (16) und Abzugswalze (17) eine quer zur Textilbahn verlaufende spitzförmige Meßkante (14) angeordnet ist,
- die Meßkante (14) an einem T-förmigen Träger (15) befestigt ist, der in Richtung A höhenverstellbar ist,
- in Höhe der Meßkante (14) drei CCD-Matrixkameras (1, 2, 3) angeordnet sind, wobei eine Kamera (2) in der Warenbahnmitte und jeweils eine Kamera (1; 3) am Rand der Textilbahn justiert sind,
- die Kamera (1, 2, 3) mit einem telezentrischen Objektiv (4) und einem motorisch gesteuerten Feintrieb (5), mit dem die Kamera (1, 2, 3) in Richtung C für die Scharfeinstellung bewegt werden kann, ausgestattet ist, wobei ein Kontrollmonitor (7) und die Bedienung der Feintriebe (5) nahe dem Maschinenpult der Maschine angeordnet sind,
- gegenüber der Kamera (1, 2, 3) eine schwenkbare Beleuchtungs-Einrichtung (6) angeordnet ist,
- die Kamera (1, 2, 3) mit der zugehörigen Beleuchtungs-Einrichtung (6) an einer in den Richtungen A und B, d.h. in der Höhe und quer zur Richtung C, verstellbaren Tragstange (8, 9, 10) befestigt ist,
- die Tragstange (8, 9, 10) an einem am Maschinengestell befestigten Rahmen (11) mit Stützhalterungen (11a) gehalten sind,
- die Kamera (1, 2, 3) und die Beleuchtungs-Einrichtung (6) mittels verstellbarer Halterungen (12) und (13) in Richtung C an der Tragstange (8, 9, 10) verschiebbar ist.

## Claims

1. A method of measuring and evaluating the quality of surfaces of textile webs whereby
- the surface effect of the web is measured on-line in three measuring points using CCD matrix cameras (1, 2, 3) directly after the mechanical treatment on the processing machine;
- in addition, the web is carried over a pointed measuring edge (14) whereby the convey and outlet of the web from the measuring edge (14) is carried out at varying acute angles α and β towards the vertical line to the optical axis of the lenses (4);
- the fibres of the fibrous web layer are set up and illuminated above the measuring edge (14);
- the illumination of the measuring point is carried out at an angle (β) to the optical axis of the lenses (4) and the fibre zone on the fabric is shot without environment and without the fabric itself to avoid any image processing operations and calculation time to mark the fibrous zone and to ensure that an image is produced, which is independent of varying colours and patterns;
- the grey-scale images simultaneously shot by the cameras (1, 2, 3) are supplied to the red, green and blue channels of a colour image processor;
- resolution, imaging scale and shutter time of the cameras are matched with the speed of the web such that a maximum blur owing to movement results having the size of the radius of one fibre when an image is shot;
- shutter and flash illumination are triggered simultaneously;
- series of images in the web direction, which have been taken from a certain camera (1, 2, 3) in an uninterrupted succession, are stored in the image memory;
- binarisation of the grey-scale images and logical operations using a binary line grid with equal distances in the edge direction are used to calculate the lengths of the fibrous web layer whereby the algorithm is designed such that it may carry out measurements independently of the position of the nap in the image so that the measuring device tolerates vibrations of the measuring edge (14) in the direction (i.e. laterally) of the vertical line to the optical axis of the lenses (4);
- the length-measured values are summarised for the following evaluations as series, and a virtually area-type evaluation basis is achieved;
- secure interrelations for individual features of the effect, such as modal value/pile height, will be proven for the parameters calculated from the frequency distributions of these measured values;
- the calculated parameters are stored as vectors or records for each image series and are transferred to the evaluation algorithm or, as an option, are also displayed on the operator display series to series in the web direction in their progress from;
- such image series are shot for comparisons with existing material specimens using a stationary method, without trigger and by moving forward the specimen, and then they are evaluated using the same algorithm;
- all calculated features in the vectors are used for the evaluation and treated with fuzzy algorithms whereby the latter provides complex consideration and an evaluation similar to the decision making by man;
- fuzzy classifiers for certain groups of items (e.g. flannel) are developed using the evaluations of several experts, which result in a division of a representative number of material specimens into quality classes;
- the parameters of these learning samples, which have been measured by stationary devices, describe the classifiers;
- from the feature vectors resulting from the measuring series of the system on the running machine or from specimens not yet evaluated and supplied to a classifier that calculates the assignment probability to all classes adapted by him whereby the class for which the highest assignment probability results is the calculated effect quality;
- the time development of the assignment for classes selected prior to the start of the system can be traced by the operator as a graphical representation on the display;
- depending on the required response time, further series will be acquired and evaluated on the machine;
- the classifiers are matched with the items that occur with the producer but remain changeable and capable of being adapted;
- without inclusion of stored expert knowledge on quality, the parameters of a specimen measured by stationary devices are permanently displayed as comparison values.

2. An apparatus for measuring and assessing the quality surface effects on textile webs as claimed in Claim 1, which is characterised by that
- a pointed measuring edge (14) is installed at the textile machine between deflection pulley (16) and take-up roll (17);
- the measuring edge (14) is mounted on a T-beam (15) which can be adjusted in height in the direction A;
- three CCD matrix cameras (1, 2, 3) are installed at the height of the measuring edge (14) whereby one camera (2) is adjusted in the middle of the web and one camera each (1, 3) on the margin of the web;
- the camera (1, 2, 3) is equipped with a telecentric lens (4) and a motorised vernier drive (5) with which the camera (1, 2, 3) can be moved for focusing in the direction C whereby a supervisory monitor (7) and the controls of the vernier drives (5) are arranged close to the control desk of the machine;
- a swing illuminating unit (6) is installed opposite to the camera (1, 2, 3);
- the camera (1, 2, 3) with the associated illuminating unit (6) is mounted on a suspension bar (8, 9, 10), which can be adjusted in the directions A and B, i.e. in the height and crosswise to the direction C;
- the supporting bars (8, 9, 10) are mounted on a frame (11) attached to the machine frame by means of supporting holders (11a);
- the cameras (1, 2, 3) and the illuminating unit (6) can be moved along the supporting bar (8, 9, 10) in the direction C using adjustable holders (12) and (13).

## Revendications

1. Procédé de mesure et d'évaluation de qualité relatif à des surfaces de pans de textiles caractérisé par le fait que
- l'effet de surface du pan de textile est mesuré en ligne sur trois points de mesure à l'aide d'une caméra à matrice à transfert de charges (1, 2, 3) directement après le traitement mécanique de ce pan de textile sur la machine de traitement,
- le pan de textile est conduit sur une arête de mesure pointue (14), et que l'amenée et la sortie du pan à et de l'arête de mesure (14) sont effectuées à des angles aigus différants α et β relatif à la verticale à l'axe optique des objectifs (4),
- les fibres de la couche de voile de carde se trouvant du côté supérieure du pan sont mises au debout et illuminées sur l'arête de mesure (14),
- l'illumination du point de mesure est effectuée à l'angle β relatif à l'axe optique des objectifs (4), et la prise de la zone à fibres est effectuée sur la structure de surface sans environnement et de la surface de textile elle-même, afin d'éviter les opérations de traitement d'images et le temps de calcul pour le marquage de la zone à fibres et afin de générer une image indépendante de différents couleurs et dessins,
- les images en gris prises simultanément par les caméras (1, 2, 3) sont amenées aux canaux rouge, vert et bleu d'un dispositif de traitement d'images,
- leurs résolution, amplification latérale et temps de déclenchement ayant été ajustés à la vitesse du pan de sorte que le flou de bougé maximal lors de la prise d'une image est égal au rayon d'une fibre,
- les illuminations de déclencheur et d'éclair sont asservies en même temps,
- la prise de séries d'images sans lacune aboutissant l'une à l'autre en direction du pan est effectuée par caméra (1, 2, 3) qui sont retenues dans la mémoire d'images,
- des longueurs de la couche de voile de carde sont calculées par le biais d'une binarisation des images en gris et d'opérations logiques à l'aide d'une grille de lignes avec des espacements égaux en direction de l'arête, l'algorithme étant conçu de manière à ce qu'il est capable de mesurer indépendamment de la position de la couche de voile de carde, et que le dispositif de mesure est capable de tolérer des vibrations de l'arête de mesure (14) en direction ou le long de la verticale à l'axe optique des objectifs (4),
- les valeurs mesurées de longueur sont groupées en séries pour les évaluations qui suivent de sorte qu'on obtient une base d'évaluation sous forme de pseudo-surface,
- des relations sures à des caractéristiques singulières de cet effet peuvent être prouvées pour les paramètres calculés sur base de distributions de fréquence de ces valeurs mesurées, par exemple valeur modale/hauteur de couche de voile de carde,
- les paramètres calculés sont enregistrés en tant que vecteurs ou jeux pour chaque série d'images et transmis à l'algorithme d'évaluation ou leur évolution peut être représentée de façon optionnelle sur l'écran de l'opérateur d'une série à une autre en direction du pan,
- de telles séries d'images sont prises de façon stationnaire et sont évaluées selon le même algorithme afin d'effectuer des comparaisons avec des échantillons de textile existants à l'aide d'une caméra sans déclencheur et en réalisant un avancement de l'échantillon,
- toutes les caractéristiques calculées dans les vecteurs sont inclues dans les évaluations et sont traitées par des algorithmes à logique floue, ces derniers permettant une prise en compte complexe et une méthode d'évaluation similaire à la prise de décision humaine,
- des classificateurs à logique floue pour certains groupes d'articles (par ex.: flanelle) sont développés en utilisant les évaluations de plusieurs experts qui résultent dans une classification d'un nombre d'échantillons représentatif dans des catégories de qualité,
- les paramètres mesurés de manière stationnaire de ces échantillons pris au hasard décrivent ces classificateurs,
- le classificateur calcule la probabilité de l'appartenance à toutes les catégories adaptées à celui-ci, à partir de ces vecteurs caractéristiques qui proviennent des séries de mesure du système effectuées sur la machine en marche et qui proviennent d'échantillons qui n'ont pas encore été évalués jusqu'ici et qui sont inclues dans un classificateur, la catégorie pour laquelle la probabilité d'appartenance s'avère la plus importante, constituant la qualité d'effet calculée,
- l'opérateur peut suivre l'évolution en temps de l'appartenance à des catégories sélectionnées avant le démarrage à l'aide d'un graphisme représenté sur l'écran,
- d'autres séries peuvent être enregistrées et évaluées au niveau de la machine de traitement en fonction du temps de réaction nécessaire,
- les classificateurs sont ajustés aux articles existants chez le fabricant, mais restent changeables et adaptatifs,
- les paramètres d'un échantillon mesuré de manière stationnaire sont représentés de façon continue en tant que valeurs de référence sans faisant appel à des informations d'expert relatives à la qualité.

2. Dispositif de mesure et d'évaluation de qualité relatif à des surfaces de pans de textiles selon la revendication 1 caractérisé par le fait que
- une arête de mesure pointue (14) qui s'étend transversalement au pan de textile se trouve au niveau de la machine de traitement entre une poulie de renvoi (16) et un cylindre délivreur (17),
- l'arête de mesure (14) est fixée sur une poutre en forme de T (15) dont la hauteur peut être ajustée en direction de A,
- trois caméras à matrice à transfert de charges (1, 2, 3) sont logées au niveau de l'arête de mesure (14), une de ces caméras étant ajustée (2) au milieu du pan de textile, et chacune des deux autres (1, 3) étant ajustée au bord du pan textile,
- la caméra (1, 2, 3) est munie d'un objectif télécentrique (4) et un actionnement micrométrique à commande par moteur (5) qui permet de mouvoir la caméra (1, 2, 3) en direction C pour effectuer leur focalisation, le moniteur de contrôle (7) et les éléments de contrôle des actionnements micrométriques (5) étant logés près du pupitre de commande de la machine,
- un dispositif d'éclairage pivotant (6) est logé en face de la caméra (1, 2, 3),
- la caméra (1, 2, 3) avec son dispositif d'éclairage (6) est fixée sur une tige porteur (8, 9, 10) ajustable et pivotable dans une des directions A et B, en hauteur et transversalement à la direction C,
- la tige porteur (8, 9, 10) est fixée à l'aide de supports d'appui (11a) sur un cadre (11) qui est fixé au bâti de machine,
- la caméra (1, 2, 3) avec son dispositif d'éclairage (6) peut être déplacée sur la tige porteur (8, 9, 10) en direction C à l'aide de supports ajustables (12) et (13).
